(19) Europäisches Patentamt
European Patent Office
Office européen des brevets

(11) EP 4 529 237 A1

# (12) EUROPEAN PATENT APPLICATION

published in accordance with Art. 153(4) EPC

(43) Date of publication:
**26.03.2025 Bulletin 2025/13**

(21) Application number: **22955955.4**

(22) Date of filing: **22.08.2022**

(51) International Patent Classification (IPC):
***H04W 4/08*** *(2009.01)*

(52) Cooperative Patent Classification (CPC):
**H04W 4/08**

(86) International application number:
**PCT/CN2022/114051**

(87) International publication number:
**WO 2024/040406 (29.02.2024 Gazette 2024/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **WANG, Yong**
  **Shenzhen, Guangdong 518129 (CN)**
- **WANG, Jian**
  **Shenzhen, Guangdong 518129 (CN)**
- **QUAN, Chao**
  **Shenzhen, Guangdong 518129 (CN)**
- **CHEN, Jing**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

## (54) COMMUNICATION METHOD, APPARATUS AND SYSTEM

(57) Embodiments of this application disclose a communication method, apparatus, and system, and relate to the field of communication technologies. The method includes: A first node obtains first information, where the first information indicates at least a target set identity resolving key SIRK of a target device set; the first node receives second information from a second node, where the second information includes a resolvable set identifier RSI of the second node, the RSI of the second node is associated with a first SIRK, and the first SIRK is an SIRK shared between at least two member nodes in a first device set to which the second node belongs; and the first node determines, based on the first information and the second information, whether the second node belongs to the target device set. The method helps flexibly and efficiently configure a device set, to ensure communication security of the device set.

Member nodes in a target device set
First node
Second node
S210: Obtain first information
S220: Second information
S230: Determine, based on the first information and the second information, whether the second node belongs to the target device set

FIG. 2



Processed by Luminess, 75001 PARIS (FR)

# Description

## TECHNICAL FIELD

This application relates to the field of communication technologies, and in particular, to a communication method, apparatus, and system.

## BACKGROUND

With the rapid development of informatization, mobile terminals (for example, mobile phones, tablet computers, or other portable smart terminals) have become indispensable and important smart tools for individuals. In the mobile internet era, these mobile terminals are more convenient in use than traditional computers (such as desktop workstations and servers) and are more likely to threaten and damage personal information. Therefore, security of communication technologies is crucial.

With the rapid development of emerging industries such as smart vehicles, smart terminals, smart homes, and smart manufacturing, innovation requirements and applications are constantly emerging. In some scenarios, a design of a device set (including a plurality of member nodes) is proposed. However, how to flexibly and efficiently configure the device set to ensure communication security of the device set is still an important problem that needs to be urgently resolved.

## SUMMARY

Embodiments of this application provide a communication method, apparatus, and system, to help flexibly and efficiently configure a device set, so as to ensure communication security of the device set.

According to a first aspect, an embodiment of this application provides a communication method. The method may be performed by a first node. The first node may be a manager node in a device set. The manager node may be implemented as a communication apparatus. The communication apparatus may be an independent device, or may be a chip or a component in a device, or may be software, and may be deployed on a terminal device, a cloud, a roadside device, a remote server, a local server, or the like. A product form and a deployment manner of the communication apparatus are not limited in this application.

The communication method may include: The first node obtains first information, where the first information indicates at least a target set identity resolving key SIRK of a target device set; the first node receives second information from a second node, where the second information includes a resolvable set identifier RSI of the second node, the RSI of the second node is associated with a first SIRK, and the first SIRK is an SIRK shared between at least two member nodes in a first device set to which the second node belongs; and the first node determines, based on the first information and the second information, whether the second node belongs to the target device set.

According to the foregoing method, the first node, as the manager node, may obtain at least the target SIRK of the target device set, and perform device identification on the second node that performs communication interaction via the target SIRK, to determine whether the second node belongs to the target device set. This ensures communication security of the target device set.

For example, the first node may be a mobile terminal of a user, and the second node may be a wireless headset of the user. The second node and another communication node (for example, the another communication node is represented as a third node, and may be a wearable device like a smart band of the user) may belong to a same device set, and the first node may be configured to manage the device set, including but not limited to discovering the device set, configuring the device set, and managing any member node in the device set (for example, identifying a member node in the device set and establishing a communication connection to a member node). A management function implemented by the first node is not limited in embodiments of this application.

It may be understood that, herein is merely an example for describing a product form of the first node, the second node, or the third node, and is not any limitation. A same product may be used as a manager node or a member node in different cases. For example, in some designs, the first node may be a vehicle of the user, the second node may be a wireless sound box of the user, and the third node may be a mobile terminal of the user. Alternatively, for example, in some designs, the first node may be a mobile terminal of the user, the second node may be a wireless headset of the user, and the third node may be a vehicle of the user. Details are not described herein. It should be understood that, in embodiments of this application, the user may be an individual user, or may be an enterprise user. This is not limited in embodiments of this application.

With reference to the first aspect, in a possible implementation, the first information further indicates a target resolving algorithm of the target device set, and that the first node determines, based on the first information and the second information, whether the second node belongs to the target device set includes: The first node resolves an identity of the second node based on the RSI of the second node and at least one SIRK according to the target resolving algorithm, where the at least one SIRK includes the target SIRK; and when the first node successfully resolves the identity of the second node, the first node determines that the second node belongs to the target device set; and/or when the first node fails to resolve the identity of the second node, the first node determines that the second node does not belong to the target device set.

According to the foregoing method, when learning of the target resolving algorithm of the target device set, the first node may resolve an identity of the second node based on the received second information according to the target resolving algorithm, to perform device identification on the second node.

It should be noted that, in this embodiment of this application, the first node may support at least one resolving algorithm as the manager node. When discovering a device set, the first node may determine, in the at least one resolving algorithm, a resolving algorithm jointly supported by member nodes in the device set, and perform device identification on the member nodes in the device set according to the resolving algorithm. When configuring a device set, the first node may select, from the at least one resolving algorithm, a resolving algorithm jointly supported by member nodes in the device set, and configure the resolving algorithm for different member nodes in the device set.

With reference to the first aspect, in a possible implementation, that the first node resolves an identity of the second node based on the RSI of the second node and at least one SIRK includes: The first node traverses the at least one SIRK, and resolves the RSI of the second node based on each traversed SIRK; and when the target SIRK on which the RSI of the second node is successfully resolved based exists in the at least one SIRK, the first node stops traversing the at least one SIRK.

According to the foregoing method, when the at least one SIRK exists, when resolving the identity of the second node, the first node may traverse the at least one SIRK to resolve the RSI of the second node until the resolving succeeds.

With reference to the first aspect, in a possible implementation, the second information further includes an identifier of the first SIRK, and that the first node determines, based on the first information and the second information, whether the second node belongs to the target device set includes: The first node resolves the RSI of the second node based on an SIRK corresponding to the identifier of the first SIRK according to a target resolving algorithm of the target device set; and when the first node successfully resolves an identity of the second node, and the SIRK corresponding to the identifier of the first SIRK is the same as the target SIRK, the first node determines that the second node belongs to the target device set.

According to the foregoing method, the first node resolves the RSI of the second node based on the received SIRK corresponding to the identifier of the first SIRK, so that calculation overheads on a first node side can be greatly reduced, and unnecessary resource waste can be reduced.

With reference to the first aspect, in a possible implementation, the target resolving algorithm is an algorithm jointly supported by the at least two member nodes in the first device set to which the second node belongs.

With reference to the first aspect, in a possible implementation, the target resolving algorithm is an algorithm with a highest priority in at least one resolving algorithm jointly supported by the at least two member nodes in the first device set to which the second node belongs.

With reference to the first aspect, in a possible implementation, the target resolving algorithm includes a hash algorithm.

With reference to the first aspect, in a possible implementation, that the first node obtains first information includes: The first node receives first indication information from the third node, where the first indication information includes the first information.

According to the foregoing method, the first node may obtain the first information in a process of discovering the target device set. The first information may be carried in the first indication information from the third node, and the third node may be a member node in the target device set.

With reference to the first aspect, in a possible implementation, that the first node obtains first information includes: The first node obtains the first information according to an internal preset method.

According to the foregoing method, the first node may obtain the first information in a process of configuring the device set, and the first information may be obtained according to the internal preset method. For example, the internal preset method may include: receiving input information from a human-machine interface HMI; and receiving indication information from an application, where the indication information includes the first information. A specific implementation of the internal preset method is not limited in embodiments of this application.

With reference to the first aspect, in a possible implementation, the method further includes: The first node sends second indication information to the second node or the third node, where the second indication information includes the first information.

According to the foregoing method, in the process of configuring the device set, the first node may send the second indication information to the at least two to-be-configured member nodes (for example, the second node or the third node), where the second indication information is used to configure these member nodes to form a device set.

With reference to the first aspect, in a possible implementation, the method further includes: The first node receives third indication information from the second node or fourth indication information from the third node, where the third indication information indicates a resolving algorithm supported by the second node, and the fourth indication information indicates a resolving algorithm supported by the third node.

According to the foregoing method, in the process of configuring the device set, the first node may negotiate, with the second node or the third node based on the indication information from the second node or the third node, a resolving algorithm jointly supported by member nodes in the to-be-configured device set.

With reference to the first aspect, in a possible implementation, the first information further indicates an identifier of the target SIRK.

With reference to the first aspect, in a possible implementation, that the first information indicates the target SIRK includes: The first information includes the target SIRK; or the first information includes the target SIRK and the identifier of the target SIRK.

According to the foregoing method, the first information may directly or indirectly indicate the target SIRK, so that the target SIRK is used to perform device identification on an interactive communication device.

With reference to the first aspect, in a possible implementation, the first SIRK and the identifier of the first SIRK are obtained in any one of the following manners: obtaining the first SIRK and the identifier of the first SIRK according to the internal preset method; obtaining the first SIRK and the identifier of the first SIRK from the first node, where the first node is a management node in the first device set; or obtaining the first SIRK and the identifier of the first SIRK from the third node, where the second node and the third node are member nodes in the first device set, and the second node is different from the third node.

With reference to the first aspect, in a possible implementation, the RSI of the second node is associated with a first resolving algorithm, and the first resolving algorithm is a resolving algorithm shared between the at least two member nodes in the first device set.

With reference to the first aspect, in a possible implementation, the first resolving algorithm is obtained in any one of the following manners: obtaining the first resolving algorithm according to the internal preset method; indicating the first resolving algorithm by the first node, where the first node is the management node in the first device set; or indicating the first resolving algorithm by the third node, where the second node and the third node are the member nodes in the first device set, and the second node is different from the third node.

With reference to the first aspect, in a possible implementation, the method further includes: The first node receives target configuration information, where the target configuration information indicates at least two member nodes in the target device set.

With reference to the first aspect, in a possible implementation, at least one node of the first node, the second node, or the third node supports at least one wireless communication technology.

According to a second aspect, an embodiment of this application provides a communication method, including: A second node obtains a first SIRK, where the first SIRK is an SIRK shared between at least two member nodes in a first device set to which the second node belongs; the second node generates an RSI of the second node based on the first SIRK; and the second node sends the RSI of the second node, where the RSI of the second node is used to determine whether the second node belongs to a target device set.

According to the foregoing method, the second node, as a member node in the first device set, may send the RSI generated by the second node to a first node, so that the first node establishes a communication connection to the second node after performing device identification on the second node. This ensures communication security.

With reference to the second aspect, in a possible implementation, the method further includes: The second node obtains a first resolving algorithm; and that the second node generates an RSI of the second node based on the first SIRK includes: The second node generates the RSI of the second node based on the first resolving algorithm and the first SIRK.

According to the foregoing method, after learning of the first resolving algorithm of the first device set, the second node may generate the RSI of the second node according to the first resolving algorithm.

With reference to the second aspect, in a possible implementation, the method further includes: The second node obtains an identifier of the first SIRK; and the second node sends the identifier of the first SIRK, where the identifier of the first SIRK and the first SIRK are used to determine whether the second node belongs to the target device set.

According to the foregoing method, after learning of the identifier of the first SIRK, the second node may send the identifier of the first SIRK to the first node, so that the first node quickly resolves an identity of the second node by using the identifier of the first SIRK. This reduces calculation overheads in a device identification process and reduces unnecessary resource waste.

With reference to the second aspect, in a possible implementation, the second node obtains the first SIRK, the first resolving algorithm, and the identifier of the first SIRK in any one of the following manners: The second node obtains the first SIRK, the first resolving algorithm, and the identifier of the first SIRK according to an internal preset method; the second node receives first indication information from a third node, where the first indication information indicates the first SIRK, the first resolving algorithm, and the identifier of the first SIRK, and the first node is a management node in the first device set; or the second node receives second indication information from a first node, where the second indication information indicates the first SIRK, the first resolving algorithm, and the identifier of the first SIRK, the second node and the third node are member nodes in the first device set, and the second node is different from the third node.

According to the foregoing method, the second node may flexibly obtain the first SIRK, the first resolving algorithm, and the identifier of the first SIRK. This is not limited in embodiments of this application.

With reference to the second aspect, in a possible implementation, the first resolving algorithm includes a hash algorithm.

With reference to the second aspect, in a possible implementation, the method further includes: The second node sends third indication information, where the third indication information indicates a resolving algorithm supported by the second node.

With reference to the second aspect, in a possible implementation, at least one node of the first node, the second node, or the third node supports at least one wireless communication technology.

According to a third aspect, an embodiment of this application provides a communication method, including: A third node establishes a communication connection to a first node; and the third node sends first indication information to the first node based on the communication connection, where the first indication information indicates at least a target SIRK of a target device set to which the third node belongs.

According to the foregoing method, after establishing the communication connection to the first node, the third node may report, to the first node based on the communication connection, the target SIRK of the target device set to which the third node belongs. It may be understood that, in embodiments of this application, the communication connection between the third node and the first node may be a wired communication connection, or may be a wireless communication connection. This is not limited in embodiments of this application.

With reference to the third aspect, in a possible implementation, that the first indication information indicates the target SIRK includes: The first information includes the target SIRK; or the first information includes the target SIRK and an identifier of the target SIRK.

With reference to the third aspect, in a possible implementation, the first information further indicates a target resolving algorithm of the target device set; or the first information further indicates a target resolving algorithm of the target device set and the identifier of the target SIRK.

According to a fourth aspect, an embodiment of this application provides a communication method, including: A first node obtains first information, where the first information indicates at least a target set identity resolving key SIRK of a target device set; the first node receives second information from a second node, where the second information includes a resolvable set identifier RSI of the second node, the RSI of the second node is associated with a first SIRK and a first resolving algorithm, the first SIRK is an SIRK shared between at least two member nodes in a first device set to which the second node belongs, and the first resolving algorithm is a resolving algorithm shared between the at least two member nodes in the first device set to which the second node belongs; and the first node determines, based on the first information and the second information, whether the second node belongs to the target device set.

According to a fifth aspect, an embodiment of this application provides a communication apparatus, including: an obtaining unit, configured to obtain first information, where the first information indicates at least a target set identity resolving key SIRK of a target device set; a transceiver unit, configured to receive second information from a second node, where the second information includes a resolvable set identifier RSI of the second node, the RSI of the second node is associated with a first SIRK, and the first SIRK is an SIRK shared between at least two member nodes in a first device set to which the second node belongs; and a determining unit, configured to determine, based on the first information and the second information, whether the second node belongs to the target device set.

With reference to the fifth aspect, in a possible implementation, the first information further indicates a target resolving algorithm of the target device set. The determining unit is configured to: resolve an identity of the second node according to the target resolving algorithm based on the RSI of the second node and at least one SIRK, where the at least one SIRK includes the target SIRK; and when successfully resolving the identity of the second node, determine that the second node belongs to the target device set; and/or when failing to resolve the identity of the second node, determine, by the first node, that the second node does not belong to the target device set.

With reference to the fifth aspect, in a possible implementation, the determining unit is specifically configured to: traverse the at least one SIRK, and resolve the RSI of the second node based on each traversed SIRK; and when the target SIRK on which the RSI of the second node is successfully resolved based exists in the at least one SIRK, stop traversing the at least one SIRK.

With reference to the fifth aspect, in a possible implementation, the second information further includes an identifier of the first SIRK, and the determining unit is configured to resolve the RSI of the second node based on an SIRK corresponding to the identifier of the first SIRK according to a target resolving algorithm of the target device set; and when the identity of the second node is successfully resolved, and the SIRK corresponding to the identifier of the first SIRK is the same as the target SIRK, determine that the second node belongs to the target device set.

With reference to the fifth aspect, in a possible implementation, the target resolving algorithm is an algorithm jointly supported by the at least two member nodes in the first device set to which the second node belongs.

With reference to the fifth aspect, in a possible implementation, the target resolving algorithm is an algorithm with a highest priority in at least one resolving algorithm jointly supported by the at least two member nodes in the first device set to which the second node belongs.

With reference to the fifth aspect, in a possible implementation, the target resolving algorithm includes a hash algorithm.

With reference to the fifth aspect, in a possible implementation, the obtaining unit is configured to receive first indication information from the third node through the transceiver unit, where the first indication information includes the first information.

With reference to the fifth aspect, in a possible implementation, the obtaining unit is configured to obtain the first information according to an internal preset method.

With reference to the fifth aspect, in a possible implementation, the transceiver unit is further configured to send second indication information to the second node or the third node, where the second indication information includes the first information.

With reference to the fifth aspect, in a possible implementation, the transceiver unit is further configured to: receive third indication information from the second node or receive fourth indication information from the third node, where the third indication information indicates a resolving algorithm supported by the second node, and the fourth indication information indicates a resolving algorithm supported by the third node.

With reference to the fifth aspect, in a possible implementation, the first information further indicates an identifier of the target SIRK.

With reference to the fifth aspect, in a possible implementation, that the first information indicates the target SIRK includes: The first information includes the target SIRK; or the first information includes the target SIRK and the identifier of the target SIRK.

With reference to the fifth aspect, in a possible implementation, the first SIRK and the identifier of the first SIRK are obtained in any one of the following manners: obtaining the first SIRK and the identifier of the first SIRK according to the internal preset method; obtaining the first SIRK and the identifier of the first SIRK from the first node, where the first node is a management node in the first device set; or obtaining the first SIRK and the identifier of the first SIRK from the third node, where the second node and the third node are member nodes in the first device set, and the second node is different from the third node.

With reference to the fifth aspect, in a possible implementation, the RSI of the second node is associated with a first resolving algorithm, and the first resolving algorithm is a resolving algorithm shared between the at least two member nodes in the first device set.

With reference to the fifth aspect, in a possible implementation, the first resolving algorithm is obtained in any one of the following manners: obtaining the first resolving algorithm according to the internal preset method; indicating the first resolving algorithm by the first node, where the first node is the management node in the first device set; or indicating the first resolving algorithm by the third node, where the second node and the third node are the member nodes in the first device set, and the second node is different from the third node.

With reference to the fifth aspect, in a possible implementation, the transceiver unit is further configured to receive target configuration information, where the target configuration information indicates at least two member nodes in the target device set.

With reference to the fifth aspect, in a possible implementation, at least one node of the first node, the second node, or the third node supports at least one wireless communication technology.

According to a sixth aspect, an embodiment of this application provides a communication apparatus used in a second node, including: an obtaining unit, configured to obtain a first SIRK, where the first SIRK is an SIRK shared between at least two member nodes in a first device set to which the second node belongs; a generation unit, configured to generate an RSI of the second node based on the first SIRK; and a transceiver unit, configured to send the RSI of the second node, where the RSI of the second node is used to determine whether the second node belongs to a target device set.

With reference to the sixth aspect, in a possible implementation, the obtaining unit is further configured to obtain a first resolving algorithm; and the generation unit is configured to generate, by the second node, the RSI of the second node according to the first resolving algorithm and the first SIRK.

With reference to the sixth aspect, in a possible implementation, the obtaining unit is further configured to obtain an identifier of the first SIRK; and the transceiver unit is further configured to send the identifier of the first SIRK, where the identifier of the first SIRK and the first SIRK are used to determine whether the second node belongs to the target device set.

With reference to the sixth aspect, in a possible implementation, the second node obtains the first SIRK, the first resolving algorithm, and the identifier of the first SIRK in any one of the following manners: The obtaining unit obtains the first SIRK, the first resolving algorithm, and the identifier of the first SIRK according to an internal preset method; the transceiver unit receives first indication information from a third node, where the first indication information indicates the first SIRK, the first resolving algorithm, and the identifier of the first SIRK, and the first node is a management node in the first device set; or the transceiver unit receives second indication information from a first node, where the second indication information indicates the first SIRK, the first resolving algorithm, and the identifier of the first SIRK, the second node and the third node are member nodes in the first device set, and the second node is different from the third node.

With reference to the sixth aspect, in a possible implementation, the first resolving algorithm includes a hash algorithm.

With reference to the sixth aspect, in a possible implementation, the transceiver unit is further configured to send third indication information, where the third indication information indicates a resolving algorithm supported by the second node.

With reference to the sixth aspect, in a possible implementation, at least one node of the first node, the second node, or the third node supports at least one wireless communication technology.

According to a seventh aspect, an embodiment of this application provides a communication apparatus, including: a communication unit, configured to: establish a communication connection to a first node; and send first indication information to the first node based on the communication connection, where the first indication information indicates at least a target SIRK of a target device set to which the third node belongs.

With reference to the seventh aspect, in a possible implementation, that the first indication information indicates the target SIRK includes: The first information includes the target SIRK; or the first information includes the target SIRK and an identifier of the target SIRK.

With reference to the seventh aspect, in a possible implementation, the first information further indicates a target resolving algorithm of the target device set; or the first information further indicates a target resolving algorithm of the target device set and the identifier of the target SIRK.

According to an eighth aspect, an embodiment of this application provides a communication apparatus, including: an obtaining unit, configured to obtain first information, where the first information indicates at least a target set identity resolving key SIRK of a target device set; a transceiver unit, configured to receive second information from a second node, where the second information includes a resolvable set identifier RSI of the second node, the RSI of the second node is associated with a first SIRK and a first resolving algorithm, the first SIRK is an SIRK shared between at least two member nodes in a first device set to which the second node belongs, and the first resolving algorithm is a resolving algorithm shared between the at least two member nodes in the first device set to which the second node belongs; and a determining unit, configured to determine, based on the first information and the second information, whether the second node belongs to the target device set.

According to a ninth aspect, an embodiment of this application provides a communication apparatus, including: a communication interface, configured to communicate with another apparatus; and a processor, coupled to the communication interface, so that the communication apparatus performs the method according to any one of the first aspect and the possible implementations of the first aspect, or performs the method according to any one of the second aspect and the possible implementations of the second aspect, or performs the method according to any one of the third aspect and the possible implementations of the third aspect, or performs the method according to any one of the fourth aspect and the possible implementations of the fourth aspect.

According to a tenth aspect, an embodiment of this application provides a computer-readable storage medium. The computer-readable storage medium stores a computer program, and when the computer program is run on a computer, the computer is enabled to perform the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect.

According to an eleventh aspect, an embodiment of this application provides a computer program product. The computer program product includes a computer program, and when the computer program is run on a computer, the computer is enabled to perform the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect.

According to a twelfth aspect, an embodiment of this application provides a chip, including a processor, where the processor is coupled to a memory, and is configured to execute a computer program or instructions stored in the memory. When the computer program or the instructions are executed, the method according to any one of the first aspect and the possible implementations of the first aspect is implemented, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a thirteenth aspect, an embodiment of this application provides a terminal device. The terminal device may be configured to implement the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect. For example, the terminal device includes but is not limited to: a smart transportation device (for example, a car, a ship, an unmanned aerial vehicle, a train, or a truck), a smart manufacturing device (for example, a robot, an industrial device, smart logistics, or a smart factory), and a smart terminal (for example, a mobile phone, a computer, a tablet computer, a palmtop computer, a desktop computer, a headset, a stereo, a wearable device, or a vehicle-mounted device).

With reference to the thirteenth aspect, in a possible implementation, the terminal device includes an HMI, where the HMI is configured to obtain target configuration information, and the target configuration information indicates at least two member nodes in a target device set.

According to a fourteenth aspect, an embodiment of this application provides a communication system, including one or more of the following communication apparatuses: a communication apparatus configured to implement the method according to any one of the first aspect and the possible implementations of the first aspect; a communication apparatus configured to implement the method according to any one of the second aspect and the possible implementations of the second aspect; a communication apparatus configured to implement the method according to any one of the third aspect and the possible implementations of the third aspect; and a communication apparatus configured to implement the method according to any one of the fourth aspect and the possible implementations of the fourth aspect.

Based on the implementations provided in the foregoing aspects, embodiments of this application may be further combined to provide more implementations.

For technical effect that can be achieved in any possible implementation of any one of the second aspect to the fourteenth aspect, refer to descriptions of the technical effect that can be achieved in any possible implementation of the first aspect. Repeated details are not described.

## BRIEF DESCRIPTION OF DRAWINGS

FIG. 1 is a diagram of a system architecture according to an embodiment of this application;
FIG. 2 is a schematic flowchart of a communication method according to an embodiment of this application;
FIG. 3 is a schematic flowchart of discovering a device set according to an embodiment of this application;
FIG. 4 is a schematic flowchart of configuring a device set according to an embodiment of this application;
FIG. 5 is a schematic flowchart of configuring a device set according to an embodiment of this application;
FIG. 6 is a schematic flowchart of configuring a device set according to an embodiment of this application;
FIG. 7 is a diagram of an HMI on which a device set is configured according to an embodiment of this application;
FIG. 8 is a schematic flowchart of device identification according to an embodiment of this application;
FIG. 9 is a diagram of a communication apparatus according to an embodiment of this application;
FIG. 10 is a diagram of a communication apparatus according to an embodiment of this application;
FIG. 11 is a diagram of a communication apparatus according to an embodiment of this application; and
FIG. 12 is a diagram of a communication apparatus according to an embodiment of this application.

## DESCRIPTION OF EMBODIMENTS

Embodiments of this application provide a communication method, apparatus, and system, to help flexibly and efficiently configure a device set, so as to ensure communication security. The method and apparatus are based on a same technical concept. Because problem-resolving principles of the method and apparatus are similar, mutual reference may be made to implementations of the apparatus and method, and repeated descriptions are not described. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

For ease of understanding, the following provides descriptions with reference to accompanying drawings and embodiments.

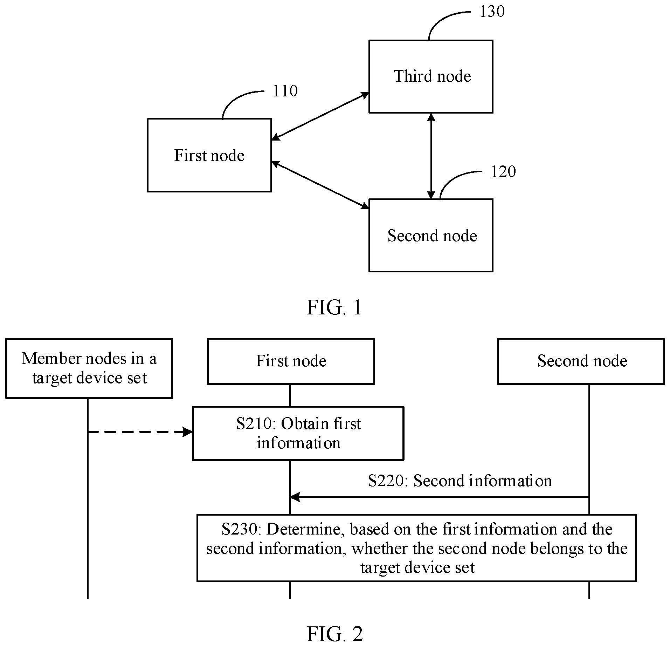

FIG. 1 is a diagram of a system architecture to which an embodiment of this application is applicable.

Refer to FIG. 1. The system architecture may include a plurality of communication nodes. For example, the plurality of communication nodes are represented as a first node 110, a second node 120, and a third node 130.

Any one communication node in the first node 110, the second node 120, and the third node 130 may support at least one wireless communication technology. Any two communication nodes in the first node 110, the second node 120, and the third node 130 may communicate with each other, and different communication nodes may use a same wireless communication technology or different wireless communication technologies for communication. This is not limited in embodiments of this application.

For example, the first node 110, the second node 120, and the third node 130 may all perform communication interaction by using a first wireless communication technology (or a second wireless communication technology).

Alternatively, for example, the first node 110 may perform communication interaction with the second node 120 or the third node 130 by using the first wireless communication technology, and the second node 120 and the third node 130 may perform communication interaction by using the second wireless communication technology. The first wireless communication technology is different from the second wireless communication technology. In a converged communication scenario of the first communication technology and the second communication technology, at least two communication nodes that use the first communication technology form a first communication system, and at least two communication nodes that use the second communication technology form a second communication system. A communication connection may be established between the first communication system and the second communication system, to form a heterogeneous communication system, so as to perform a corresponding communication service and/or transmit communication service data in the heterogeneous communication system. For example, the heterogeneous communication system may also be referred to as a converged communication system, a tight interworking (tight interworking) communication system, or an interworking (interworking) communication system.

In this embodiment of this application, any one of the first node 110, the second node 120, or the third node 130 may be an electronic device having a data receiving and sending capabilities.

For example, the electronic device may be a terminal device, including a device that provides voice and/or data connectivity for a user, and specifically including a device that provides voice for the user, or including a device that provides data connectivity for the user, or including a device that provides voice and data connectivity for the user. For example, a handheld device with a wireless connection function or a processing device connected to a wireless modem is included. For example, the terminal device may communicate with a core network through a radio access network (radio access network, RAN), and exchange voice and/or data with the RAN.

In a specific implementation process, the terminal device may include but is not limited to a vehicle, user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device or a narrowband internet of things (narrowband internet of things, NB-IoT) terminal device, a subscriber unit (subscriber unit), a subscriber station (subscriber station), a mobile station (mobile station), a mobile station (mobile), a remote station (remote station), an access point (access point, AP), a remote terminal (remote terminal) device, an access terminal (access terminal) device, a user terminal (user terminal) device, a user agent (user agent), a user device (user device), or the like. For another example, the terminal device may be specifically implemented as: a mobile phone (or referred to as a "cellular" phone) or a computer having a mobile terminal device; a dedicated IoT terminal device, an industrial control (industrial control) device, a remote medical (remote medical) device, a smart grid (smart grid) device, or a smart city (smart city) device; a portable, pocket-sized, handheld, computer built-in, or vehicle-mounted mobile apparatus; or a personal communication service (personal communication service, PCS) phone, a cordless phone, a session initiation protocol (session initiation protocol, SIP) telephone, a wireless local loop (wireless local loop, WLL) station, a personal digital assistant (personal digital assistant, PDA), or the like. In an optional design, the terminal device may be further implemented as a restricted device, for example, a device with low power consumption, a device with a limited storage capability, or a device with a limited computing capability. In an optional design, the terminal device may include components such as a barcode, a radio frequency identification (radio frequency identification, RFID), a sensor, a global positioning system (global positioning system, GPS), and a laser scanner.

In an optional design, the terminal device may alternatively be a wearable device. The wearable device may also be referred to as a wearable smart device, a smart wearable device, or the like, and is a general term of wearable devices that are smartly designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, and can implement powerful functions through software support, data exchange, and cloud interaction. In a broad sense, wearable smart devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

In an optional design, the terminal device may alternatively be a machine smart device like a self-driving (self-driving) device, a transportation safety (transportation safety) device, a virtual reality (virtual reality, VR) terminal device, or an augmented reality (augmented reality, AR) terminal device.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In an optional design, the terminal device may further include a relay (relay). Alternatively, it is understood that the terminal device may include any device that can perform data communication with a base station.

For example, the electronic device may alternatively be a network device, for example, include an access network (access network, AN) device. The access network device may include a device, for example, a base station or an access point, that communicates with a wireless terminal device over an air interface in an access network via one or more cells. The base station may be configured to: perform conversion between a received over-the-air frame and an internet protocol (Internet Protocol, IP) packet, and serve as a router between the terminal device and remaining parts of the access network, where the remaining parts of the access network may include an IP network. In an optional design, the network device may include a base station in a 2nd generation (2nd generation, 2G) communication system, or include a base station in a 3rd generation (3rd generation, 3G) communication system, or include a base station in a 4th generation (4th generation, 4G) communication system, for example, an evolved NodeB (NodeB, eNB, or e-NodeB, evolved NodeB) in a long term evolution (long term evolution, LTE) system or a long term evolution-advanced (long term evolution-advanced, LTE-A) system, or may include a next-generation NodeB (next-generation NodeB, gNB) in a 5th generation (5th generation, 5G) new radio (new radio, NR) system (also referred to as an NR system), or may include a central unit (central unit, CU) and a distributed unit (distributed unit, DU) in a cloud radio access network (cloud radio access network, cloud RAN) system, and a base station in various future communication systems, for example, a base station in a 6th generation (6th generation, 6G) communication system. This is not limited in embodiments of this application. For another example, the network device may include a network device in V2X, that is, a road side unit (road side unit, RSU). The RSU may include a fixed infrastructure entity supporting a V2X application, and may exchange a message with another entity supporting the V2X application. For another example, the network device may further include a core network device. The core network device includes, for example, one or more of the following in a 5G system: an access and mobility management function (access and mobility management function, AMF), a session management function (session management function, SMF), and a user plane function (user plane function, UPF), or includes a mobility management entity (mobility management entity, MME) in a 4G system.

It should be understood that, in some technical scenarios, an electronic device with similar data receiving and sending capabilities may not be referred to as a node. However, for ease of description, electronic devices with the data receiving and sending capabilities are collectively referred to as nodes in embodiments of this application.

In embodiments of this application, in the used heterogeneous communication system, device types of the first node 110, the second node 120, or the third node 130 may be the same or different. For example, the first node 110, the second node 120, and the second node 130 are all terminal devices or network devices, or the first node 110 may be a network device, and the second node 120 and the third node 130 may be terminal devices. For example, the first communication technology is a 5G communication technology, and the second communication technology is a short-range wireless communication technology. The second node 120 and the third node 130 may be terminal devices having a short-range communication function. The first node 110 may include but is not limited to at least one of function entities such as an access device: a trusted non-3rd generation partnership project (3rd Generation Partnership Project, 3GPP) gateway function (Trusted Non-3GPP Gateway Function, TNGF), and core network devices: an SMF, an AMF, a UPF, and a data network (Data Network, DN). The second node 120 may support the first communication technology and the second communication technology. On one hand, the second node 120 may perform 5G communication with the first node 110, and on the other hand, the second node 120 may perform short-range communication with the third node 130.

It should be noted that, that the second node 120 may support the first communication technology may also be understood as that the second node 120 may support service transmission implemented based on the first communication technology, or the second node 120 may support a service of the first communication technology. That the second node 120 supports the second communication technology may also be understood as that the second node may support service transmission implemented based on the second communication technology, or the second node 120 may support a service of the second communication technology. Similarly, the first node 110 and the third node 130 may support both the first communication technology and the second communication technology. Nodes or function entities may be connected through an interface. A sequence number or a name of the interface is not limited in embodiments of this application. An interface defined in a related 3GPP standard protocol may be used, or an interface in a future communication system may be used. Details are not described herein.

It should be noted that, the foregoing is merely an example to indicate that the communication system may include the first node 110, the second node 120, and the third node 130, and a communication mode between the nodes and functional modules of the nodes, and does not limit a quantity of nodes and the sequence number or the name of the interface. During specific implementation, a quantity of first nodes 110, a quantity of second nodes 120, and a quantity of third nodes 130 may not be limited to 1.

In embodiments of this application, the short-range wireless communication technology may include a technology supporting wireless short-range communication. Wireless short-range communication includes that two communication parties transmit information through a radio wave and a transmission distance falls within a short range (for example, within 100 meters), which may be referred to as short-range wireless communication. The short-range wireless communication technology includes but is not limited to a Bluetooth (Bluetooth) technology, a wireless fidelity (wireless fidelity, Wi-Fi) technology, a near field communication (near field communication, NFC) technology, a Wi-Fi Aware technology, a universal short-range communication technology, a short-range wireless communication technology defined by the NearLink Alliance, or the like. The short-range wireless communication can be widely used in various aspects such as file transfer, remote control, projection, and sensing of surrounding devices (such as a smart automobile, a smart terminal device, a smart home device, and a smart manufacturing device). The following lists several examples of short-range communication technologies.

Bluetooth is a radio technology that supports short-range communication between devices, and can be used for wireless information exchange between a plurality of devices including a mobile phone, a wireless headset, a notebook computer, and a related peripheral. The "Bluetooth" technology can be used to effectively simplify communication between mobile communication terminal devices, and successfully simplify communication between a device and the internet, so that data is transmitted more rapidly and efficiently, and a path for wireless communication is widened.

The wireless fidelity (wireless fidelity, Wi-Fi) technology is also referred to as a wireless local area network (wireless local area network, WLAN) direct connection or Wi-Fi Direct, and may exist in the Wi-Fi protocol suite that enables devices to easily connect to each other without an intermediary wireless access point. Usage of the wireless fidelity technology ranges from web browsing to file transfer, and the wireless fidelity technology enables a plurality of devices to communicate with each other simultaneously, which can take full advantage of a Wi-Fi speed. Devices that comply with this standard can be easily interconnected even if the devices come from different manufacturers.

The Wi-Fi Aware technology is responsible for sensing and discovery in a Wi-Fi technology, and can help a Wi-Fi device sense a surrounding service, for example, a surrounding device, to implement peer-to-peer (Peer-to-Peer, P2P) message exchange between two devices within a short range by using Wi-Fi Aware. Because Wi-Fi Aware can sense a surrounding device, a plurality of functions may be implemented, for example, sensing a nearby person and establishing a connection, adding a friend, playing a same game, or the like; or discovering a surrounding device and implementing photo sharing or location sharing; or securely sending a file to a printer without accessing a network (for example, a cellular or wireless network).

It should be noted that, in addition to the foregoing listed short-range communication technologies, another existing short-range communication technology, or another short-range communication technology that may appear in the future with evolution of communication technologies may also be applicable to this solution.

It should be noted that in embodiments of this application, a term "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

Unless otherwise specified, ordinal numbers such as "first", "second", and "third" mentioned in embodiments of this application are used to distinguish a plurality of objects, but are not used to limit priorities or importance degrees of the plurality of objects. For example, the first node, the second node, and the third node are merely used to distinguish different nodes, but do not indicate different priorities, importance degrees, or the like of the three nodes.

In embodiments of this application, based on roles of different communication nodes in the system architecture, the first node 110 may be a manager node in a device set, and the second node 120 and the third node 130 may be member nodes in the device set.

The first node 110 may be configured to discover, configure, and manage at least two member nodes in a device set. The second node 120/the third node 130 may be a member node in a fixed set discovered by the first node 110, or may be configured as a member node in a device set by the first node 110. The second node 120 and the third node 130 may belong to a same device set, or may belong to different device sets. The second node 120/third node 130 may serve as a server, and may bear a related service of a device set to which the second node 120/third node 130 belongs.

It should be noted that, in embodiments of this application, only the second node 120 and the third node 130 are used to represent member nodes that can be configured as a same device set, and a quantity or a function of member nodes in the device set is not limited, and a quantity of device sets to which any member node belongs is not limited. Different member nodes in a same device set may have a same role or different roles in the device set. For example, in some embodiments, method steps performed by the different member nodes in the device set are the same, that is, no role division, regardless of whether the method steps are performed at a set configuration level or a service level. In some other embodiments, the member nodes in the device set may be divided without a role at a configuration level, and are used to implement different services at a service level. Role division of the member nodes in the device set is not limited in embodiments of this application. In the following embodiments, steps performed by the second node 120 or the third node 130 as an execution body may be replaced with each other. For example, the second node 120 may be configured to perform method steps performed by the third node 130, and the third node 130 may be configured to perform method steps performed by the second node 120.

Based on the system architecture shown in FIG. 1, an embodiment of this application provides a communication method.

FIG. 2 is a schematic flowchart of a communication method according to an embodiment of this application. The method may be collaboratively implemented by the first node and the second node/third node shown in FIG. 1. An example in which the method is collaboratively implemented by the first node and the second node is used. Refer to FIG. 2, the communication method may include the following steps.

S210: The first node obtains first information.

In this embodiment of this application, the first information may indicate at least a target set identity resolving key (set identity resolving key, SIRK) of a target device set. The target device set is a device set discovered or configured by the first node. The first node may obtain the first information in a process of discovering or configuring the target device set. The target SIRK may be used to identify, in a device identification process, whether a communication node that performs communication interaction with the first node belongs to the target device set.

The device set discovered by the first node means that the device set is a preconfigured fixed set, and at least two member nodes in the device set may share configuration information of the device set. The configuration information may include, for example, but is not limited to, at least one of the following: an SIRK of the device set, a resolving algorithm corresponding to the device set, or an identifier of the SIRK of the device set. When S210 is implemented, the first node may obtain the first information from a member node in the device set, in other words, the first node discovers the target device set. The first node may store the first information, and when required subsequently, perform, based on the first information, device identification on the communication node that performs communication interaction with the first node. It should be understood that the member node herein may be any member node in the device set, or may be a pre-specified member node in the device set. This is not limited in embodiments of this application.

The device set configured by the first node means that the device set is a to-be-configured non-fixed set, and the first node, as a manager node, may perform information configuration on at least two communication nodes, so that the at least two communication nodes become member nodes in a to-be-configured same device set. S210 may be one of the steps of configuring the target device set by the first node, or S210 may be obtained from stored target configuration information, where the target configuration information is stored after the first node configures the target device set.

It should be understood that, herein is merely an example to provide description that the first node may obtain the first information in a process of discovering or configuring the target device set, a manner in which the first node obtains the first information is not limited, and specific content of the first information is not limited. The following describes detailed implementation details of S210 with reference to an embodiment and a method flowchart. Details are not described herein.

S220: The first node receives second information from the second node.

In this embodiment of this application, the second node may be a member node in a first device set discovered or configured by the first node, and the first device set may be the same as or different from the target device set described in S210.

The second information may include a resolvable set identifier (resolvable set identifier, RSI) of the second node, the RSI of the second node is associated with a first SIRK, and the first SIRK is an SIRK shared between at least two member nodes in the first device set to which the second node belongs.

S230: The first node determines, based on the first information and the second information, whether the second node belongs to the target device set. For example, the first node may resolve an identity of the second node based on the target SIRK and the RSI of the second node, to determine whether the second node belongs to the target device set.

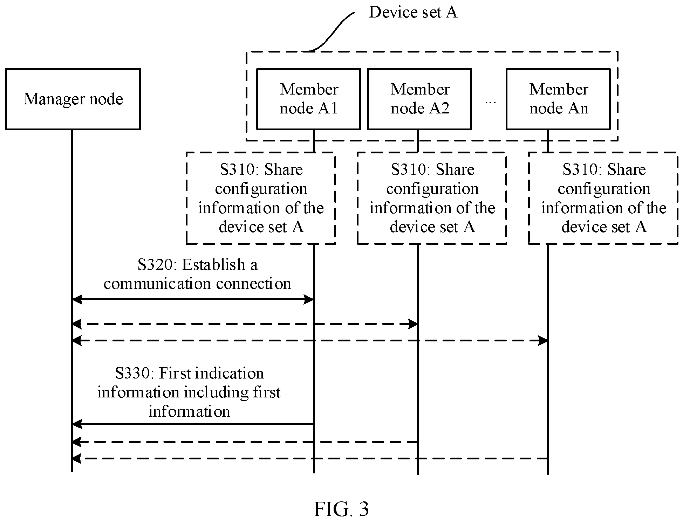

In different cases, when the first node implements S210, manners of obtaining the first information are different, or content indicated by the first information/second information is different, and processes of S220 and S230 are also different. For ease of understanding, the following provides descriptions with reference to FIG. 3 to FIG. 6. It may be understood that the steps in FIG. 3 to FIG. 7 are merely examples for describing steps that may be included in the communication method in embodiments of this application, but do not constitute any limitation. Specific execution sequences of the steps in the examples may be adjusted mutually. In some embodiments, technical features in different embodiments described with reference to FIG. 3 to FIG. 7 may further be combined into a new embodiment.

FIG. 3 is a schematic flowchart of discovering a device set according to an embodiment of this application.

A device set A is used to represent a target device set to be discovered by a manager node (for example, the manager node is represented as a first node). The device set A is a preconfigured fixed set, and the device set may include n member nodes (including a second node or a third node): a member node A1, a member node A2, ..., and a member node An, where n is an integer greater than or equal to 2.

The third node may establish a communication connection to the first node, and send first indication information to the first node based on the communication connection, where the first indication information indicates at least a target SIRK of a target device set to which the third node belongs. The first node may receive the first indication information and store the first indication information. When device identification needs to be performed, the first node may receive second information from the second node, and determine, based on first information and the second information, whether the second node belongs to the target device set. The second information may include a resolvable set identifier RSI of the second node, the RSI of the second node is associated with a first SIRK, and the first SIRK is an SIRK shared between at least two member nodes in a first device set to which the second node belongs.

Refer to FIG. 3. A process in which the manager node discovers the device set A may include the following steps.

S310 (optional step): Any one of the member node A1, the member node A2, ..., and the member node An shares configuration information of the device set A. For example, the configuration information of the device set A may include but is not limited to at least one of the following: an SIRK of the device set A, a resolving algorithm corresponding to the device set A, or an identifier of the SIRK of the device set A.

In this embodiment of this application, a sharing mode of the configuration information of the device set A may include but is not limited to the following examples:

Sharing mode 1: The configuration information of the device set A may be configured on corresponding member nodes when the member nodes in the device set A are produced, and the resolving algorithm corresponding to the device set A is a resolving algorithm jointly supported by all the member nodes in the device set A. Any member node in the device set A may support at least one resolving algorithm, and the resolving algorithm corresponding to the device set A is one of the at least one resolving algorithm.

Sharing mode 2: The configuration information of the device set A may be preconfigured on a specified member node (for example, the member node A1). When S310 is implemented, the specified member node may send the configuration information of the device set A to other member nodes in the device set A, to implement information sharing. For example, as the specified node, the member node A1 may send indication information (for example, the indication information is represented as first indication information) in a unicast or broadcast manner, where the indication information may indicate at least two member nodes in the device set A and the configuration information of the device set A. Correspondingly, after receiving the indication information from the member node A1, the other member nodes in the device set A, for example, the member nodes A2, ..., and An, may learn, by resolving the received indication information, that the member nodes belong to the device set A, and may store the configuration information of the device set A to which the member nodes belong.

It should be understood that this is merely an example of the sharing mode of the configuration information of the device set A, and does not constitute any limitation. In the foregoing sharing mode 2, the member node A1 may transmit the indication information after establishing communication connections to the other member nodes, for example, the member nodes A2, ..., and An. A specific link establishment process may be determined based on a communication technology used between the two parties. Details are not described herein.

S320: A communication connection is established between the manager node and a member node (for example, the member node A1, and the member node may be represented as the third node) in the device set A.

In this embodiment of this application, any communication node in a communication system may serve as a discovering party and a discovered party, and discover each other with another communication node, to establish a communication connection between the two parties.

When the manager node serves as a discovering party, the manager node may perform a device discovery process periodically or in an event triggering manner based on a service capability supported by the manager node. After the manager node successfully discovers the member node A1 in the device set A, the manager node may establish a communication connection to the member node A1. When the member node A1 serves as a discovering party, the member node A1 may perform a device discovery process periodically or in an event triggering manner based on a service capability supported by the member node A1. After the member node A1 successfully discovers the manager node, the member node A1 may establish a communication connection to the manager node.

It should be noted that, in this embodiment of this application, if the manager node discovers the member node A1, when S320 is implemented, the manager node may send a link establishment request to the member node A1, to request to establish the communication connection to the member node A1. The member node A1 may send a link establishment response to the manager node, to confirm establishment of the communication connection to the manager node. If the member node A1 discovers the manager node, the member node A1 may send a link establishment request to the manager node, to request to establish the communication connection to the manager node. The manager node may send a link establishment response to the member node A1, to confirm establishment of the communication connection to the member node A1. According to a communication technology used between the manager node and the member node A1, the communication connection established between the two parties may include but is not limited to any one of the following: a radio resource control (radio resource control, RRC) connection, a SparkLink basic (SparkLink Basic, SLB) connection, or a SparkLink low energy (SparkLink Low Energy, SLE) connection. For detailed link establishment details, refer to a link establishment method of a specific communication technology used between the two parties. Details are not described herein.

S330: The member node A1 sends first indication information to the manager node based on the communication connection to the manager node, where the first indication information may include the first information, and the first information indicates at least the SIRK of the device set A. Correspondingly, the manager node may receive the first indication information from the member node A1. In an optional implementation, the manager node may store the first indication information.

For example, the first information may include the SIRK of the device set A. Alternatively, for example, the first information may include the SIRK of the device set A, and may indicate the resolving algorithm corresponding to the device set A. Alternatively, for example, the first information may include the SIRK of the device set A and the identifier of the SIRK of the device set A, and may indicate the resolving algorithm corresponding to the device set A.

Therefore, based on the process of discovering the device set shown in FIG. 3, after discovering the member node A1, the manager node may receive the first indication information from the member node A1, and obtain, based on the first indication information, the configuration information of the device set A to which the member node A1 belongs, to discover the device set A. Further, after receiving information from the other member nodes (for example, the member node A2, ..., and the member node An) or an unknown communication node X, the manager node may resolve, based on the configuration information of the device set A and the received information, identities of the other member nodes or an identity of the unknown communication node X, and determine whether the other member nodes or the unknown communication node X belong or belongs to the device set A, to ensure secure access of the device set A.

It should be noted that FIG. 3 is described by using only the member node A1 as an example, and does not constitute any limitation. S320 and S330 may alternatively be performed by any node in the member node A2, ..., and the member node An. In FIG. 3, a solid connection line represents communication interaction between the manager node and the member node that is in the device set A and that performs S320 and S330, and a dashed connection line represents communication interaction between the manager node and the member nodes that are in the device set A and that do not perform S320 and S330.

It should be noted that, in this embodiment of this application, to ensure communication security, after a communication connection between the manager node and any member node (for example, the member node A1) is involved in FIG. 3, if encryption protection is enabled for the communication connection, communication interaction may be directly and securely performed between the two communication parties. If encryption protection is not enabled for the communication connection, when the manager node performs communication interaction with the member node A1 based on the communication connection, as an information source end, the manager node or the member node A1 may further encrypt to-be-transmitted information.

For example, the member node A1 in FIG. 3 is the source end. When S330 is implemented, the member node A1 may encrypt the first indication information. For example, K1 represents a shared key (for example, the shared key is represented as a link key) negotiated when the communication connection is established between the member node A1 and the manager node, and the member node A1, as the information source end, may derive an encryption key k2 based on K1. For example, the member node A1, as the information source end, may generate the encryption key according to the following expression (1):

$$k2=KDF(K1, M, Len) \quad (1).$$

Herein, K1 represents the shared key corresponding to the communication connection between the manager node and the member node, and the shared key may be, for example, 128 bits (bits); M represents the 'SIRK' of the device set A; Len represents a length (length) of M; k2 represents the encryption key; and KDF represents a key derivation function (key derivation function), for example, HMAC-SM3, AES-CMAC, or HMAC-SHA256.

A message C sent by the member node A1 as the information source end to the manager node may be obtained by performing exclusive OR processing based on the encryption key and the to-be-transmitted first indication information, for example, an expression (2) or an expression (3):

$$C=k2\oplus SIRK \quad (2),$$

and

$$C=k2\oplus(SIRK||SIRK\ ID||resolving\ algorithm) \quad (3).$$

Herein, $\oplus$ represents exclusive OR processing in an encryption method. In the expression (2), the first indication information may include the SIRK of the device set A to which the member node A1 belongs. In the expression (3), the first indication information may include the SIRK of the device set A to which the member node A1 belongs, the identifier (identification, ID) of the SIRK of the device set A, and the resolving algorithm corresponding to the device set A. "||" is a connection character for connecting two character strings. It should be understood that, when the first indication information includes different information, the expression (2) or the expression (3) may further include other variations. Details are not described herein.

Correspondingly, after receiving the message C, the manager node may decrypt the message C via the shared key, to obtain the SIRK of the device set A, the identifier of the SIRK of the device set A, or the resolving algorithm corresponding to the device set A.

It should be noted that, the foregoing is merely an example for describing encryption protection, and does not constitute any limitation. In another embodiment, the information source end and an information destination end may perform encryption protection on the to-be-transmitted information based on a key agreement algorithm or an encryption algorithm supported by the information source end and the information destination end. Details are not described herein. It should be understood that, in the following embodiments, in the method steps related to interaction based on the communication connection, a same or similar method may be used between the source end and the destination end to perform encryption protection on exchanged information. Details are not distinguished and described one by one below.

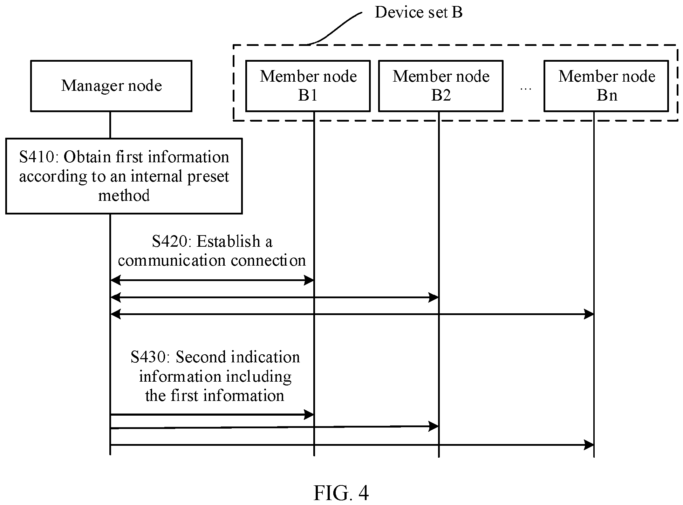

FIG. 4 is a schematic flowchart of configuring a device set according to an embodiment of this application.

A device set B is used to represent a target device set to be configured by a manager node (for example, the manager node is represented as a first node). The device set B may include n candidate member nodes (including a second node or a third node): a member node B1, a member node B2, ..., and a member node Bn, where n is an integer greater than or equal to 2.

When the first node needs to configure the target device set, the first node establishes a communication connection to at least one candidate member node (for example, the second node or the third node) in the target device set, and sends first indication information to the at least one candidate member node based on the communication connection. The first indication information may include first information, and the first information indicates at least a target SIRK of the to-be-configured target device set. When device identification needs to be performed, the first node may receive second information from the second node, and determine, based on the first information and the second information, whether the second node belongs to the target device set. The second information may include a resolvable set identifier RSI of the second node, the RSI of the second node is associated with a first SIRK, and the first SIRK is an SIRK shared between at least two member nodes in a first device set to which the second node belongs.

Refer to FIG. 4. A process in which the manager node configures the device set B may include the following steps.

S410: The manager node obtains first information according to an internal preset method. The first information may indicate at least an SIRK of the to-be-configured device set B.

For example, the SIRK of the to-be-configured device set B may be a random number generated by the manager node. A manner of generating the SIRK of the to-be-configured device set B is not limited in embodiments of this application.

In another example, the first information may further indicate an identifier of the SIRK of the to-be-configured device set B, and the identifier may be allocated by the manager node to the SIRK when the manager node generates the SIRK of the to-be-configured device set B. In another example, the first information may further indicate a resolving algorithm corresponding to the to-be-configured device set B. The resolving algorithm may be any one of at least one resolving algorithm supported by the manager node. The resolving algorithm corresponding to the device set B may be determined by the manager node, for example, determined based on indication information of an upper-layer service or based on indication information from an HMI. The HMI may be user equipment. Specific content of the first information is not limited in embodiments of this application. Details are not described herein.

S420: The manager node establishes communication connections to the n candidate member nodes in the device set B. For detailed implementation details of a link establishment process between the manager node and any candidate member node in the device set B, refer to the related descriptions in S320. Details are not described herein again.

S430: The manager node sends second indication information (or referred to as configuration information of the device set B) to the n candidate member nodes in the device set B based on the communication connections to the n candidate member nodes in the device set B, where the second indication information includes the first information, and the first information indicates at least the SIRK of the device set B.

For example, the first information may include the SIRK of the device set B. Alternatively, for example, the first information may include the SIRK of the device set B, and may indicate the resolving algorithm corresponding to the device set B. Alternatively, for example, the first information may include the SIRK of the device set B and the identifier of the SIRK of the device set B, and may indicate the resolving algorithm corresponding to the device set B.

Correspondingly, after receiving the first indication information, the n candidate member nodes in the device set B may learn that the n candidate member nodes belong to the device set B, thereby completing configuration. In an optional embodiment, the member node B1, the member node B2, ..., and the member node Bn may store the received configuration information, to subsequently use the configuration information of the device set B.

Therefore, in the process of configuring the device set shown in FIG. 4, when the manager node needs to configure the device set, the manager node sends related configuration information of the to-be-configured device set B to each candidate member node, to complete configuration. Further, after receiving information from other member nodes (for example, the member node B2, ..., and the member node Bn) or an unknown communication node X, the manager node may resolve, based on the configuration information of the device set B and the received information, identities of the other member nodes or an identity of the unknown communication node X, and determine whether the other member nodes or the unknown communication node X belong or belongs to the device set B, to ensure secure access of the device set B.

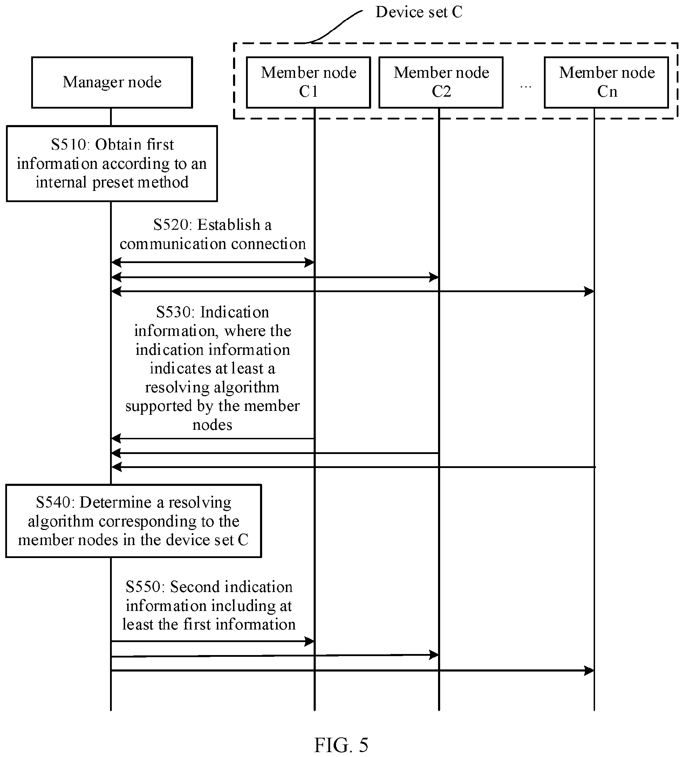

FIG. 5 is a schematic flowchart of configuring a device set according to an embodiment of this application.

A device set C is used to represent a target device set to be configured by a manager node (for example, the manager node is represented as a first node). The device set C may include n candidate member nodes (including a second node or a third node): a member node C1, a member node C2, ..., and a member node Cn, where n is an integer greater than or equal to 2.

When the first node needs to configure the target device set, the first node establishes a communication connection to at least one candidate member node (for example, the second node or the third node) in the target device set, and negotiates, based on the communication connection, a target resolving algorithm with the at least one candidate member node, where the target resolving algorithm is a resolving algorithm jointly supported by the at least one candidate member node. In addition, the first node may further send first indication information to the at least one candidate member node, where the first indication information may include first information, and the first information indicates at least a target SIRK of the to-be-configured target device set. When device identification needs to be performed, the first node may receive second information from the second node, and determine, based on the first information and the second information, whether the second node belongs to the target device set. The second information may include a resolvable set identifier RSI of the second node, the RSI of the second node is associated with a first SIRK, and the first SIRK is an SIRK shared between at least two member nodes in a first device set to which the second node belongs.

Refer to FIG. 5. A process in which the manager node configures the device set C may include the following steps.

S510: The manager node obtains first information according to an internal preset method. The first information may indicate at least an SIRK of the to-be-configured device set C. For a manner in which the manager node obtains the first information, refer to the related descriptions in S410. Details are not described herein again.

S520: The manager node establishes communication connections to the n candidate member nodes in the device set C. For detailed implementation details of a link establishment process between the manager node and any candidate member node in the device set C, refer to the related descriptions in S320. Details are not described herein again.

S530: The n candidate member nodes in the device set C send indication information (for example, the indication information is represented as third indication information or fourth indication information) to the manager node based on the communication connections between the manager node and the n candidate member nodes, where the indication information indicates at least a resolving algorithm supported by the corresponding candidate member nodes.

S540: The manager node determines, based on the indication information of the n candidate member nodes from the device set C, a resolving algorithm corresponding to the device set C.

For example, the resolving algorithm corresponding to the device set C may be a resolving algorithm jointly supported by the n candidate member nodes in the device set C.

If the resolving algorithm jointly supported by the n candidate member nodes in the device set C does not exist in a resolving algorithm supported by the manager node, configuration fails. If there is at least one resolving algorithm jointly supported by the n candidate member nodes in the device set C, the resolving algorithm corresponding to the device set C may be an algorithm with a highest priority in the at least one resolving algorithm jointly supported by the n candidate member nodes in the device set C. For example, if there is only one resolving algorithm jointly supported by the n candidate member nodes in the device set C, the resolving algorithm may be the resolving algorithm corresponding to the device set C by default. If there are at least two resolving algorithms jointly supported by the n candidate member nodes in the device set C, the resolving algorithm corresponding to the device set C may be an algorithm with a highest priority in the at least two resolving algorithms jointly supported by the n candidate member nodes in the device set C.

It should be noted that, in this embodiment of this application, a priority of the at least one resolving algorithm supported by the manager node may be preset, or may be configured by a user. This is not limited in embodiments of this application.

S550: The manager node sends second indication information (or referred to as configuration information of the device set C) to the n candidate member nodes in the device set C based on the communication connections to the n candidate member nodes in the device set C, where the second indication information includes the first information, and the first information indicates at least the SIRK of the device set C.

For example, the first information may include the SIRK of the device set C. Alternatively, for example, the first information may include the SIRK of the device set C, and may indicate the resolving algorithm corresponding to the device set C. Alternatively, for example, the first information may include the SIRK of the device set C and an identifier of the SIRK of the device set C, and may indicate the resolving algorithm corresponding to the device set C.

Correspondingly, after receiving the first indication information, the n candidate member nodes in the device set C may learn that the n candidate member nodes belong to the device set C, thereby completing configuration. In an optional embodiment, the member node C1, the member node C2, ..., and the member node Cn may store the received configuration information, to subsequently use the configuration information of the device set C.

Therefore, in the process of configuring the device set shown in FIG. 5, when configuring the device set, the manager node may exchange information with each candidate member node in the to-be-configured device set C, to determine through negotiation the resolving algorithm corresponding to the device set C. Therefore, the manager node may send related configuration information of the to-be-configured device set C to each candidate member node, to complete configuration. Further, after receiving information from other member nodes (for example, the member node C2, ..., and the member node Cn) or an unknown communication node X, the manager node may resolve, based on the configuration information of the device set C and the received information, identities of the other member nodes or an identity of the unknown communication node X, and determine whether the other member nodes or the unknown communication node X belong or belongs to the device set C, to ensure secure access of the device set C.

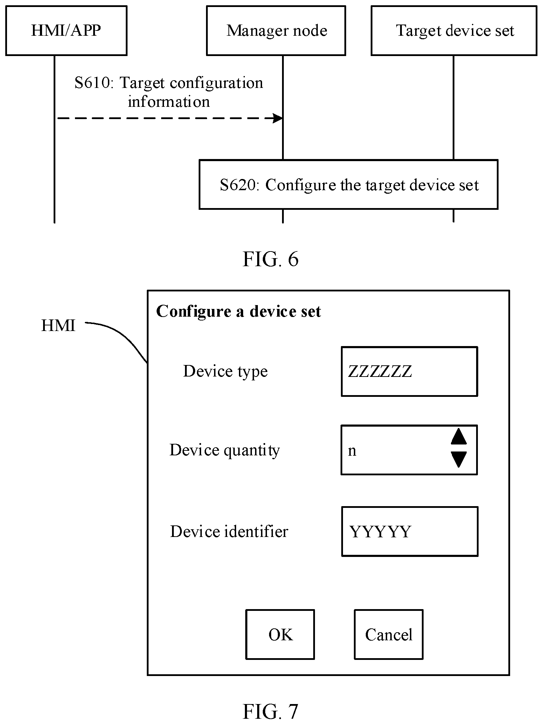

FIG. 6 is a schematic flowchart of configuring a device set according to an embodiment of this application.

Refer to FIG. 6. In an optional implementation, a process in which a manager node (for example, the manager node is represented as a first node) configures a target device set may include the following steps.

S610: The manager node receives target configuration information, where the target configuration information indicates at least two member nodes in the target device set.

The target device set is a to-be-configured device set. For example, the target device set may be the device set B shown in FIG. 4 or the device set C shown in FIG. 5.

In an example, the target configuration information in S610 may come from a human-machine interface (human-machine interaction, HMI). The HMI may be an HMI of the manager node. The manager node may output an attribute configuration item of the target device set through the HMI. A user may input information for the attribute configuration item output through the HMI, that is, the manager node receives the target configuration information.

In an example, as shown in FIG. 7, the attribute configuration item presented on the HMI may include, for example, but is not limited to, the following examples: a device type, a device quantity, or a device identifier. The user may input a corresponding parameter for each attribute configuration item of the to-be-configured target device set in an input or selection manner, to obtain the target configuration information. For example, the user may input or select "ZZZZZZ" in the "device type" configuration item to indicate a to-be-configured device type, input or select n in the "device quantity" configuration item to indicate a quantity of to-be-configured devices, and input or select "YYYYY" in the "device identifier" configuration item to indicate a to-be-configured device identifier. After confirming that information about each configuration item is correct, the user may click "OK" to submit the target configuration information. If the user decides to give up configuration of the target device set, the user may click "cancel" to cancel the configured parameters. A specific implementation of configuring the device set is not limited in embodiments of this application.

Alternatively, for example, the target configuration information in S610 may come from an application (application, APP). The APP may be installed and run on the manager node. The APP may generate the target configuration information based on an application scenario or an implemented service, and provide the target configuration information to the manager node, that is, the manager node receives the target configuration information. The APP may generate the target configuration information based on a device type, a device quantity, and the like that are required for the implemented service. In an optional embodiment, if a device whose type is the same as that of the to-be-configured device type exists in common devices historically associated with the APP, the APP may further select a target device from the common devices as a to-be-configured device, and the target configuration information may further indicate a device identifier of the to-be-configured device. A generation manner is not limited in embodiments of this application.

It should be understood that, only a source of the target configuration information in this embodiment of this application is described herein by using an example, and a manner of obtaining the target configuration information is not limited. In this embodiment of this application, during specific implementation, the target configuration information indicates the at least two member nodes in the target device set, and may include a quantity of the at least two member nodes indicated by the target configuration information, or device identifiers of the at least two member nodes indicated by the target configuration information. Alternatively, the target configuration information may further indicate device types of the at least two member nodes. Specific indication content of the target configuration information is not limited in embodiments of this application.

S620: The manager node configures the target device set based on the received target configuration information.

In this embodiment of this application, after receiving the target configuration information, the manager node may learn that the target device set needs to be configured. In this case, the manager node may obtain first information based on the target configuration information according to an internal preset method. The first information may indicate, for example, at least one of the following: a target SIRK of the to-be-configured target device set, an identifier of a target SIRK, or a resolving algorithm corresponding to the target device set. Further, the manager node may configure the target device set based on the first information. A specific implementation process in S620 is similar to S410 to S430 shown in FIG. 4, or is similar to S510 to S550 shown in FIG. 5. For detailed details, refer to the foregoing related descriptions with reference to FIG. 4 or FIG. 5. Details are not described herein again.

Therefore, in the process of configuring the device set shown in FIG. 6, after receiving the target configuration information, the manager node may perform communication interaction with a candidate member node in the to-be-configured target device set based on the target configuration information, to flexibly configure the target device set. Further, after receiving information from another member node in the target device set or an unknown communication node X, the manager node may resolve, based on the configuration information of the target device set and the received information, an identity of the another member node or the unknown communication node X, and determine whether the another member node or the unknown communication node X belongs to the target device set, to ensure secure access of the target device set.

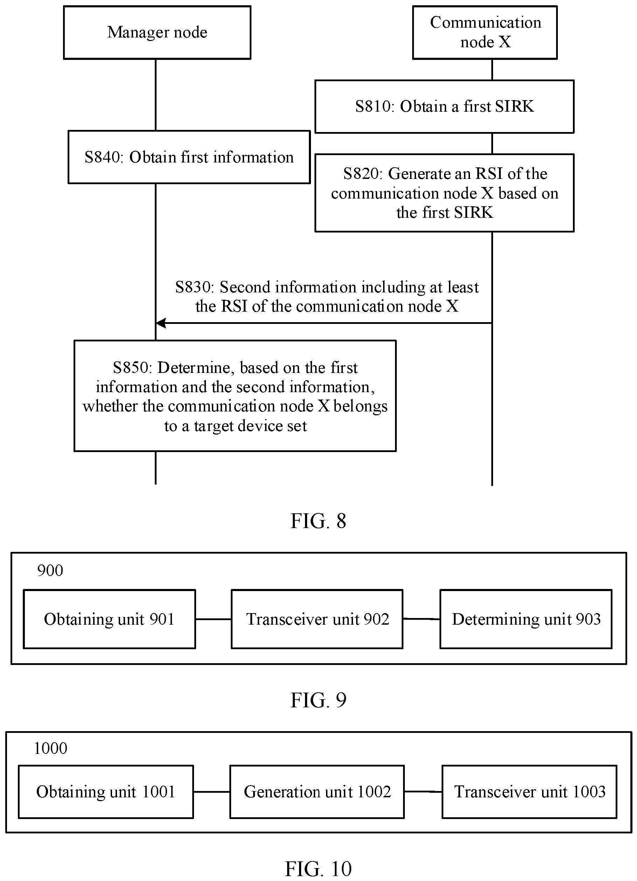

FIG. 8 is a schematic flowchart of device identification according to an embodiment of this application.

A manager node (for example, the manager node is represented as a first node) may be configured to store the configuration information of the device set A shown in FIG. 3, or store the configuration information of the device set B shown in FIG. 4, or may store the configuration information of the device set C shown in FIG. 5, for example, the SIRK of the device set A/B/C, the identifier of the SIRK of the device set A/B/C, or the resolving algorithm corresponding to the device set A/B/C. An unknown communication node X is used to represent a to-be-identified device. The communication node X may be any member node in the device set A shown in FIG. 3, or may be any member node in the device set B shown in FIG. 4, or may be any member node in the device set C shown in FIG. 5. The manager node may identify the communication node X based on the stored configuration information and second information from the unknown communication node X.

Refer to FIG. 8. Device identification performed by the manager node on the communication node X (for example, the communication node X is represented as a second node) may include the following steps.

S810: The communication node X obtains a first SIRK.

In this embodiment of this application, the first SIRK is an SIRK shared between at least two member nodes in a first device set to which the communication node X belongs. The first device set may be, for example, the device set A shown in FIG. 3, the device set B shown in FIG. 4, or the device set C shown in FIG. 5. Correspondingly, the first SIRK may be, for example, the SIRK of the device set A, the SIRK of the device set B, or the SIRK of the device set C. When S810 is implemented, the communication node X may obtain the first SIRK in the processes of configuring the device sets shown in FIG. 3 to FIG. 6. For a manner of obtaining the first SIRK, refer to the related descriptions in FIG. 3 to FIG. 5. Details are not described herein again.

S820: The communication node X generates an RSI of the communication node X based on the first SIRK.

For example, the RSI of the communication node X may be associated with a first resolving algorithm, and the first resolving algorithm may be a resolving algorithm shared between the at least two member nodes in the first device set to which the communication node X belongs. The first resolving algorithm may be obtained in any one of the following manners: obtaining the first resolving algorithm according to an internal preset method; indicating the first resolving algorithm by the first node, where the first node is a management node in the first device set; or indicating the first resolving algorithm by a third node, where the communication node X and the third node are member nodes in the first device set, and the communication node X is different from the third node. For a negotiation process of the first resolving algorithm, refer to related descriptions in FIG. 3 to FIG. 6. Details are not described herein again.

For example, the first resolving algorithm may include a hash (hash) algorithm, for example, an algorithm like HMAC-SM3, AES-CMAC, or HMAC-SHA256. When S820 is implemented, the communication node X may generate the RSI of the communication node X based on the first SIRK according to the first resolving algorithm.

In a format shown in Table 1, the RSI may include two parts: a random part (rand) and a hash part (hash).

Table 1

| Random part (rand) | Hash part (hash) |
|---|---|

The random part (rand) may be a random number, and may be generated and stored by the communication node X according to a random algorithm. The hash part may be generated based on the random part and an SIRK of the first device set, as shown in expression (4):

$$\text{RSI hash}=\text{ah (SIRK, rand) mod } 2^\wedge\text{Len (4)}$$

Herein, ah represents the hash algorithm, for example, the algorithm like HMAC-SM3, AES-CMAC, or HMAC-SHA256; mod is a modulo operator; and Len indicates a length of the hash part, for example, 32, and a unit is bit (bit). A length of the random part or a length of the hash part is not limited in embodiments of this application.

The communication node X may obtain the RSI of the communication node X based on the random part (rand) and the RSI hash.

S830: The communication node X sends the second information, where the second information may include at least the RSI of the communication node X. Correspondingly, the manager node receives the second information.

In this embodiment of this application, the communication node X may send the second information in a broadcast or unicast manner. A communication technology is not limited in embodiments of this application. Correspondingly, the manager node may receive the second information from the communication node X by using a same communication technology. For example, the second information may further include an identifier of the first SIRK.

S840: The manager node obtains first information. The first information indicates at least a target SIRK of a target device set.

Refer to the example of the method for discovering the device set or configuring the device set shown in FIG. 3 to FIG. 6. The manager node may discover or configure at least one device set, and store configuration information of the at least one device set, for example, an SIRK of any device set, an identifier of an SIRK of any device set, or a resolving algorithm corresponding to any device set. When S840 is implemented, the target device set may be the any device set or a specified device set in the at least one device set, and the manager node may obtain, for example, the first information from the stored configuration information. Details are not described herein again.

S850: The manager node determines, based on the first information and the second information, whether the communication node X belongs to the target device set.

In an example, the first information may further indicate a target resolving algorithm of the target device set. When S850 is implemented, the manager node may resolve an identity of the communication node X based on the RSI of the communication node X and at least one stored SIRK according to the target resolving algorithm, where the at least one SIRK includes the target SIRK. When the manager node successfully resolves the identity of the communication node X, the manager node determines that the communication node X belongs to the target device set; and/or when the manager node fails to resolve the identity of the communication node X, the manager node determines that the communication node X does not belong to the target device set.

If the second information includes only the RSI of the communication node X, when S850 is implemented, the manager node may traverse the at least one SIRK, resolve the RSI of the communication node X based on each traversed SIRK, and when the target SIRK on which the RSI of the communication node X is successfully resolved based exists in the at least one SIRK, stop traversing the at least one SIRK.

During specific implementation, the manager node may calculate a local (local) hash part based on each traversed SIRK according to the following expression (5):

$$\text{Local (hash)}=\text{ah (SIRK, rand) mod } 2^\wedge\text{Len (5)}$$

Herein, ah represents the hash algorithm, for example, the algorithm like HMAC-SM3, AES-CMAC, or HMAC-SHA256; mod is the modulo operator; and Len indicates the length of the hash part, for example, 32, and the unit is bit (bit). The length of the random part or the length of the hash part is not limited in embodiments of this application.

The manager node may compare the received hash part in the RSI of the communication node X with Local (hash) calculated based on each traversed SIRK. If the received hash part in the RSI of the communication node X and Local (hash) are the same, it is considered that the identity of the communication node X is successfully resolved based on the used SIRK, and it is determined that the communication node X belongs to the target device set. If the received hash part in the RSI of the communication node X and Local (hash) are different, it is considered that the identity of the communication node X fails to be resolved based on the used SIRK, and it is determined that the communication node X does not belong to the target device set, and a next SIRK is traversed. In a process of traversing the at least one stored SIRK, the manager node may repeat the foregoing method until the identity of the communication node X is successfully resolved, or a calculation process ends when the at least one SIRK is traversed.

If the second information includes the RSI of the communication node X and the identifier of the first SIRK, when S850 is implemented, the manager node may resolve the RSI of the communication node X based on an SIRK corresponding to the identifier of the first SIRK according to the target resolving algorithm of the target device set, and when successfully resolving the identity of the communication node X, determine that the communication node X belongs to the target device set.

During specific implementation, the manager node may calculate a local (local) hash part based on the SIRK corresponding to the identifier of the first SIRK according to the foregoing expression (5), and compare Local (hash) obtained through calculation with the received hash part in the RSI of the communication node X. If the received hash part in the RSI of the communication node X and Local (hash) are the same, it is considered that the identity of the communication node X is successfully resolved based on the used SIRK, and it is determined that the communication node X belongs to the target device set. If the received hash part in the RSI of the communication node X and Local (hash) are different, it is considered that the identity of the communication node X fails to be resolved based on the used SIRK, and it is determined that the communication node X does not belong to the target device set. It should be understood that, in this embodiment of this application, if there is at least one SIRK corresponding to the identifier of the first SIRK, the manager node may traverse the at least one SIRK corresponding to the identifier of the first SIRK, resolve the RSI of the communication node X based on each traversed SIRK, and when the target SIRK on which the RSI of the communication node X is successfully resolved based exists in the at least one SIRK, stop traversing the at least one SIRK. For details, refer to the foregoing related descriptions. Details are not described herein again.

Therefore, according to the method shown in FIG. 8, in a device identification process, after receiving second information of an unknown communication node X, the manager node may resolve the second information based on the stored configuration information, to resolve an identity of the communication node X, and determine whether the communication node X belongs to the target device set managed by the manager node. The method can support a plurality of resolving algorithms, can efficiently resolve a set identifier, and can be widely applied to various communication scenarios, and helps ensure communication security of a device set.

An embodiment of this application further provides a communication apparatus, configured to perform the method performed by a manager node (for example, represented as the first node) and any member node (for example, the second node or the third node) in the foregoing method embodiment. For related features, refer to the foregoing method embodiment. Details are not described herein again.

As shown in FIG. 9, a communication apparatus 900 may include: an obtaining unit 901, configured to obtain first information, where the first information indicates at least a target set identity resolving key SIRK of a target device set; a transceiver unit 902, configured to receive second information from a second node, where the second information includes a resolvable set identifier RSI of the second node, the RSI of the second node is associated with a first SIRK, and the first SIRK is an SIRK shared between at least two member nodes in a first device set to which the second node belongs; and a determining unit 903, configured to determine, based on the first information and the second information, whether the second node belongs to the target device set. For a specific implementation, refer to the method steps implemented by the manager node in the foregoing method embodiment. Details are not described herein again.

As shown in FIG. 10, a communication apparatus 1000 may include: an obtaining unit 1001, configured to obtain a first SIRK, where the first SIRK is an SIRK shared between at least two member nodes in a first device set to which the second node belongs; a generation unit 1002, configured to generate an RSI of the second node based on the first SIRK; and a transceiver unit 1003, configured to send the RSI of the second node, where the RSI of the second node is used to determine whether the second node belongs to a target device set. For a specific implementation, refer to the method steps implemented by the second node in the foregoing method embodiment. Details are not described herein again.

It should be noted that in the example in FIG. 9 or FIG. 10, the obtaining unit and the transceiver unit may be a same unit or different units. This is not limited in embodiments of this application. For example, if the obtaining unit obtains information from a local database, the obtaining unit and the transceiver unit are the same unit; or if the obtaining unit obtains information from an apparatus other than the communication apparatus, the obtaining unit and the transceiver unit are different units.

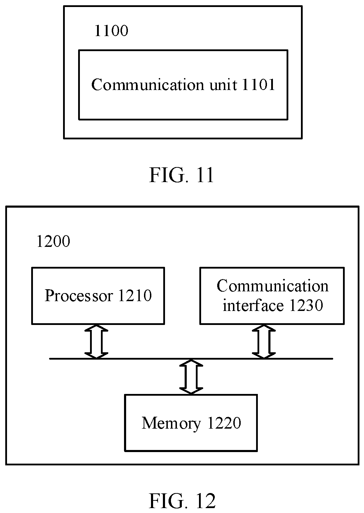

As shown in FIG. 11, a communication apparatus 1100 may include: a communication unit 1101, configured to: establish a communication connection to a first node; and send first indication information to the first node based on the communication connection, where the first indication information indicates at least a target SIRK of a target device set to which the third node belongs. For a specific implementation, refer to the method steps implemented by the third node in the foregoing method embodiment. Details are not described herein again. It should be understood that the communication apparatus 1100 may further include other functional units, such as an obtaining unit, a generation unit, and a determining unit. Details are not described herein again.

It should be understood that division into the units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a simple embodiment, a person skilled in the art may figure out that the communication apparatus in the foregoing embodiments may be in a form shown in FIG. 12.

An apparatus 1200 shown in FIG. 12 includes at least one processor 1210 and a communication interface 1230. In an optional design, the apparatus may further include a memory 1220.

A specific connection medium between the processor 1210 and the memory 1220 is not limited in embodiments of this application.

In the apparatus shown in FIG. 12, when communicating with another device, the processor 1210 may perform data transmission through the communication interface 1230.

When the communication apparatus uses the form shown in FIG. 12, the processor 1210 in FIG. 12 may invoke computer-executable instructions stored in the memory 1220, so that the apparatus 1200 can perform any one of the foregoing method embodiments.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, so that the processor performs the method according to any one of the foregoing embodiments.

For example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system-on-a-chip (system-on-a-chip, SoC), or may be a CPU, or may be a network processor (network processor, NP), or may be a microcontroller (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies. In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

## Claims

**1.** A communication method, comprising:

obtaining, by a first node, first information, wherein the first information indicates at least a target set identity resolving key SIRK of a target device set;
receiving, by the first node, second information from a second node, wherein the second information comprises a resolvable set identifier RSI of the second node, the RSI of the second node is associated with a first SIRK, and the first SIRK is an SIRK shared between at least two member nodes in a first device set to which the second node belongs; and
determining, by the first node based on the first information and the second information, whether the second node belongs to the target device set.

**2.** The method according to claim 1, wherein the first information further indicates a target resolving algorithm of the target device set, and the determining, by the first node based on the first information and the second information, whether the second node belongs to the target device set comprises:

resolving, by the first node, an identity of the second node based on the RSI of the second node and at least one SIRK according to the target resolving algorithm, wherein the at least one SIRK comprises the target SIRK; and
when the first node successfully resolves the identity of the second node, determining, by the first node, that the second node belongs to the target device set; and/or when the first node fails to resolve the identity of the second node, determining, by the first node, that the second node does not belong to the target device set.

**3.** The method according to claim 2, wherein the resolving, by the first node, an identity of the second node based on the RSI of the second node and at least one SIRK comprises:

traversing, by the first node, the at least one SIRK, and resolving the RSI of the second node based on each traversed SIRK; and
when the target SIRK on which the RSI of the second node is successfully resolved based exists in the at least one SIRK, stopping, by the first node, traversing the at least one SIRK.

**4.** The method according to claim 1, wherein the second information further comprises an identifier of the first SIRK, and the determining, by the first node based on the first information and the second information, whether the second node belongs to the target device set comprises:

resolving, by the first node, the RSI of the second node based on an SIRK corresponding to the identifier of the first SIRK according to a target resolving algorithm of the target device set; and
when the first node successfully resolves an identity of the second node, and the SIRK corresponding to the identifier of the first SIRK is the same as the target SIRK, determining, by the first node, that the second node belongs to the target device set.

**5.** The method according to any one of claims 2 to 4, wherein the target resolving algorithm is an algorithm jointly supported by the at least two member nodes in the first device set to which the second node belongs.

**6.** The method according to any one of claims 2 to 5, wherein the target resolving algorithm is an algorithm with a highest priority in at least one resolving algorithm jointly supported by the at least two member nodes in the first device set to which the second node belongs.

**7.** The method according to any one of claims 2 to 6, wherein the target resolving algorithm comprises a hash algorithm.

**8.** The method according to any one of claims 1 to 7, wherein the obtaining, by a first node, first information comprises:
receiving, by the first node, first indication information from the third node, wherein the first indication information comprises the first information.

**9.** The method according to any one of claims 1 to 7, wherein the obtaining, by a first node, first information comprises:
obtaining, by the first node, the first information according to an internal preset method.

**10.** The method according to claim 9, wherein the method further comprises:
sending, by the first node, second indication information to the second node or the third node, wherein the second indication information comprises the first information.

**11.** The method according to claim 10, wherein the method further comprises:
receiving, by the first node, third indication information from the second node or fourth indication information from the third node, wherein the third indication information indicates a resolving algorithm supported by the second node, and the fourth indication information indicates a resolving algorithm supported by the third node.

**12.** The method according to any one of claims 8 to 11, wherein the first information further indicates an identifier of the target SIRK.

**13.** The method according to any one of claims 1 to 12, wherein that the first information indicates the target SIRK comprises:

the first information comprises the target SIRK; or
the first information comprises the target SIRK and the identifier of the target SIRK.

**14.** The method according to any one of claims 1 to 13, wherein the first SIRK and the identifier of the first SIRK are obtained in any one of the following manners:

obtaining the first SIRK and the identifier of the first SIRK according to the internal preset method;
obtaining the first SIRK and the identifier of the first SIRK from the first node, wherein the first node is a management node in the first device set; or
obtaining the first SIRK and the identifier of the first SIRK from the third node, wherein the second node and the third node are member nodes in the first device set, and the second node is different from the third node.

**15.** The method according to any one of claims 1 to 14, wherein the RSI of the second node is associated with a first resolving algorithm, and the first resolving algorithm is a resolving algorithm shared between the at least two member nodes in the first device set.

**16.** The method according to claim 15, wherein the first resolving algorithm is obtained in any one of the following manners:

obtaining the first resolving algorithm according to the internal preset method;
indicating the first resolving algorithm by the first node, wherein the first node is the management node in the first device set; or
indicating the first resolving algorithm by the third node, wherein the second node and the third node are the member nodes in the first device set, and the second node is different from the third node.

**17.** The method according to any one of claims 1 to 16, wherein the method further comprises:
receiving, by the first node, target configuration information, wherein the target configuration information indicates at least two member nodes in the target device set.

**18.** The method according to any one of claims 1 to 17, wherein at least one node of the first node, the second node, or the third node supports at least one wireless communication technology.

**19.** A communication method, comprising:

obtaining, by a second node, a first SIRK, wherein the first SIRK is an SIRK shared between at least two member nodes in a first device set to which the second node belongs;
generating, by the second node, an RSI of the second node based on the first SIRK; and
sending, by the second node, the RSI of the second node, wherein the RSI of the second node is used to determine whether the second node belongs to a target device set.

**20.** The method according to claim 19, wherein the method further comprises:

obtaining, by the second node, a first resolving algorithm; and
the generating, by the second node, an RSI of the second node based on the first SIRK comprises:
generating, by the second node, the RSI of the second node according to the first resolving algorithm and based on the first SIRK.

**21.** The method according to claim 19 or 20, wherein the method further comprises:

obtaining, by the second node, an identifier of the first SIRK; and
sending, by the second node, the identifier of the first SIRK, wherein the identifier of the first SIRK and the first SIRK are used to determine whether the second node belongs to the target device set.

**22.** The method according to claim 21, wherein the second node obtains the first SIRK, the first resolving algorithm, and the identifier of the first SIRK in any one of the following manners:

obtaining, by the second node, the first SIRK, the first resolving algorithm, and the identifier of the first SIRK according to an internal preset method;
receiving, by the second node, first indication information from a third node, wherein the first indication information indicates the first SIRK, the first resolving algorithm, and the identifier of the first SIRK, and the first node is a management node in the first device set; or
receiving, by the second node, second indication information from a first node, wherein the second indication information indicates the first SIRK, the first resolving algorithm, and the identifier of the first SIRK, the second node and the third node are member nodes in the first device set, and the second node is different from the third node.

**23.** The method according to any one of claims 20 to 22, wherein the first resolving algorithm comprises a hash algorithm.

**24.** The method according to any one of claims 19 to 23, wherein the method further comprises:
sending, by the second node, third indication information, wherein the third indication information indicates a resolving algorithm supported by the second node.

**25.** The method according to any one of claims 19 to 24, wherein at least one node of the first node, the second node, or the third node supports at least one wireless communication technology.

**26.** A communication method, comprising:

establishing, by a third node, a communication connection to a first node; and
sending, by the third node, first indication information to the first node based on the communication connection, wherein the first indication information indicates at least a target SIRK of a target device set to which the third node belongs.

**27.** The method according to claim 26, wherein that the first indication information indicates the target SIRK comprises:

the first information comprises the target SIRK; or
the first information comprises the target SIRK and an identifier of the target SIRK.

**28.** The method according to claim 26 or 27, wherein

the first information further indicates a target resolving algorithm of the target device set; or
the first information further indicates a target resolving algorithm of the target device set and the identifier of the target SIRK.

**29.** A communication apparatus, comprising:

an obtaining unit, configured to obtain first information, wherein the first information indicates at least a target set identity resolving key SIRK of a target device set;
a transceiver unit, configured to receive second information from a second node, wherein the second information comprises a resolvable set identifier RSI of the second node, the RSI of the second node is associated with a first SIRK, and the first SIRK is an SIRK shared between at least two member nodes in a first device set to which the second node belongs; and
a determining unit, configured to determine, based on the first information and the second information, whether the second node belongs to the target device set.

**30.** A communication apparatus, comprising:

an obtaining unit, configured to obtain a first SIRK, wherein the first SIRK is an SIRK shared between at least two member nodes in a first device set to which the second node belongs;
a generation unit, configured to generate an RSI of the second node based on the first SIRK; and
a transceiver unit, configured to send the RSI of the second node, wherein the RSI of the second node is used to determine whether the second node belongs to a target device set.

**31.** A communication apparatus, comprising:
a communication unit, configured to: establish a communication connection to a first node; and send first indication information to the first node based on the communication connection, wherein the first indication information indicates at least a target SIRK of a target device set to which the third node belongs.

**32.** A communication apparatus, comprising:

a communication interface, configured to communicate with another apparatus; and
a processor, coupled to the communication interface, so that the communication apparatus performs the method according to any one of claims 1 to 18, or performs the method according to any one of claims 19 to 25, or performs the method according to any one of claims 26 to 28.

**33.** A computer-readable storage medium, wherein the computer-readable storage medium stores a computer program, and when the computer program is run on a computer, the computer is enabled to perform the method according to any one of claims 1 to 18, or perform the method according to any one of claims 19 to 25, or perform the method according to any one of claims 26 to 28.

**34.** A computer program product, wherein the computer program product comprises a computer program, and when the computer program is run on a computer, the computer is enabled to perform the method according to any one of claims 1 to 18, or perform the method according to any one of claims 19 to 25, or perform the method according to any one of claims 26 to 28.

**35.** A chip, comprising a processor, wherein the processor is coupled to a memory, and is configured to execute a computer program or instructions stored in the memory; and when the computer program or the instructions are executed, the method according to any one of claims 1 to 18 is implemented, or the method according to any one of claims 19 to 25 is performed, or the method according to any one of claims 26 to 28 is performed.

**36.** A communication system, comprising one or more of the following communication apparatuses:

a communication apparatus configured to implement the method according to any one of claims 1 to 18;
a communication apparatus configured to implement the method according to any one of claims 19 to 25; and
a communication apparatus configured to implement the method according to any one of claims 26 to 28.

130
Third node
110
First node
120
Second node

FIG. 1

Member nodes in a target device set
First node
Second node
S210: Obtain first information
S220: Second information
S230: Determine, based on the first information and the second information, whether the second node belongs to the target device set

FIG. 2

Device set A
Manager node
Member node A1
Member node A2
...
Member node An
S310: Share configuration information of the device set A
S310: Share configuration information of the device set A
S310: Share configuration information of the device set A
S320: Establish a communication connection
S330: First indication information including first information

FIG. 3

Device set B
Manager node
Member node B1
Member node B2
...
Member node Bn
S410: Obtain first information according to an internal preset method
S420: Establish a communication connection
S430: Second indication information including the first information

FIG. 4

Device set C
Manager node
Member node C1
Member node C2
...
Member node Cn
S510: Obtain first information according to an internal preset method
S520: Establish a communication connection
S530: Indication information, where the indication information indicates at least a resolving algorithm supported by the member nodes
S540: Determine a resolving algorithm corresponding to the member nodes in the device set C
S550: Second indication information including at least the first information

FIG. 5

HMI/APP
Manager node
Target device set
S610: Target configuration information
S620: Configure the target device set
HMI
Configure a device set
Device type
ZZZZZZ
Device quantity
n
Device identifier
YYYYY
OK
Cancel

FIG. 6

FIG. 7

Manager node
Communication node X
S810: Obtain a first SIRK
S840: Obtain first information
S820: Generate an RSI of the communication node X based on the first SIRK
S830: Second information including at least the RSI of the communication node X
S850: Determine, based on the first information and the second information, whether the communication node X belongs to a target device set

FIG. 8

900
Obtaining unit 901
Transceiver unit 902
Determining unit 903

FIG. 9

1000
Obtaining unit 1001
Generation unit 1002
Transceiver unit 1003

FIG. 10

1100
Communication unit 1101

FIG. 11

1200
Processor 1210
Communication interface 1230
Memory 1220

FIG. 12

## INTERNATIONAL SEARCH REPORT

International application No. **PCT/CN2022/114051**

**A. CLASSIFICATION OF SUBJECT MATTER**

H04W4/08(2009.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, VCN, ENTXT, CNKI: 集合身份解析密钥, 身份解析密钥, 集合标识, 集合, 标识, 共享, 目标, 解析, 算法, 属于, 所属, SIRK, RSI, set, ID, identity, shar+, target, algorithm, key

**C. DOCUMENTS CONSIDERED TO BE RELEVANT**

| Category* | Citation of document, with indication, where appropriate, of the relevant passages | Relevant to claim No. |
|---|---|---|
| X | US 2022225087 A1 (REALTEK SEMICONDUCTOR CORP.) 14 July 2022 (2022-07-14) description, paragraphs [0104]-[0131] | 26-28, 31-36 |
| A | CN 114697879 A (HUAWEI TECHNOLOGIES CO., LTD.) 01 July 2022 (2022-07-01) entire document | 1-36 |
| A | CN 114786139 A (GUANGDONG OPPO MOBILE TELECOMMUNICATIONS CORP., LTD.) 22 July 2022 (2022-07-22) entire document | 1-36 |
| A | CN 112887983 A (SHANGHAI INGEEK CYBER SECURITY CO., LTD.) 01 June 2021 (2021-06-01) entire document | 1-36 |

☐ Further documents are listed in the continuation of Box C.

☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **12 April 2023** | **20 April 2023** |

Name and mailing address of the ISA/CN

**China National Intellectual Property Administration (ISA/CN)**

**China No. 6, Xitucheng Road, Jimenqiao, Haidian District, Beijing 100088**

Facsimile No. **(86-10)62019451**

Authorized officer

Telephone No.

Form PCT/ISA/210 (second sheet) (July 2022)

**INTERNATIONAL SEARCH REPORT**
**Information on patent family members**

International application No.
**PCT/CN2022/114051**

| Patent document cited in search report | | | Publication date (day/month/year) | Patent family member(s) | Publication date (day/month/year) |
|---|---|---|---|---|---|
| US | 2022225087 | A1 | 14 July 2022 | None | |
| CN | 114697879 | A | 01 July 2022 | None | |
| CN | 114786139 | A | 22 July 2022 | None | |
| CN | 112887983 | A | 01 June 2021 | None | |

Form PCT/ISA/210 (patent family annex) (July 2022)